# FASCICULE DE BREVET EUROPEEN

(11) **EP 0 793 127 B1**
(45) Date de publication et mention de la délivrance du brevet: **11.04.2007**
(21) Numéro de dépôt: 97400396.4
(22) Date de dépôt: 24.02.1997
(51) Int. Cl.: G02B 6/44

(54) **Câble à fibres optiques ayant une résistance à l'écrasement accrue**
Faseroptisches Kabel mit erhöhtem Quetschwiderstand
Fibre optical cable with enhanced crush-resistance

(30) Priorité: 29.02.1996 FR 9602542
(43) Date de publication de la demande: 03.09.1997
(73) Titulaire: PRYSMIAN TELECOM CÂBLES ET SYSTEMES FRANCE S.A., 38232 Pont de Cheruy Cedex (FR)
(72) Inventeur: Missout, Bernard Michel, 94200 Ivry-Sur-Seine (FR); Heude, Hervé, 69003 Lyon (FR); Laroche, Pierre, 38118 St Baudille De La Tour (FR)
(74) Mandataire: Lhuillier, René

(56) Documents cités:
- WO-A-92/01962
- FR-A- 2 260 806
- US-A- 3 941 157
- US-A- 4 761 053
- US-A- 5 155 304

## Description

L'invention a pour objet des câbles à fibres optiques et plus précisément des câbles dont la structure et la forme sont telles que leur résistance à l'écrasement est très nettement améliorée notamment par rapport aux câbles à section circulaire de conception classique.

Les câbles à fibres optiques sont bien connus et ont eu des développements rapides depuis quelques années particulièrement dans le domaine des télécommunications, du fait des possibilités importantes de transmission des fibres optiques de très faible dimension. Ces fibres doivent néammoins être protégées mécaniquement, par la structure du câble, des contraintes liées aux efforts radiaux appliqués sur le câble comme écrasement, chocs, etc... C'est pourquoi des structures de câbles renfermant ces fibres, ont été développées pour les protéger mécaniquement selon les environnements où elles se trouvent.

Les câbles connus à fibres optiques ont des structures variées. On connaît notamment par le WO 92/01962 un câble à fibres optiques dont les fibres sont placées dans une cavité centrale, et dont la gaine est équipé extérieurement de nervures servant de surfaces anti-usure. On connaît aussi un type de câble à tubes comportant un renfort central, entouré d'une pluralité de tubes enroulés en hélice ou pseudo hélice renfermant un faisceau de fibres optiques aptes à se déplacer dans le tube. Cette faculté de déplacement des fibres dans le tube compense les variations de longueur du câble dues aux contraintes thermiques ou aux efforts de traction. Cette structure est cependant trop encombrante comparée à l'encombrement réel des fibres contenues, et est mal adaptée par exemple à des câbles de distribution dans un réseau de ville où l'on recherche un rapport maximal nombre de fibres sur diamètre câble.

On préfère donc utiliser des câbles à coefficient de dilatation faible où les fibres sont par exemple disposées en faisceaux (micromodules ronds ou rubans plats), lesquels faisceaux sont disposés pratiquement sans jeu dans la cavité cylindrique interne du câble.

Un bon rapport nombre de fibres sur diamètre extérieur du câble peut être ainsi obtenu. La section des câbles est circulaire et peut éventuellement incorporer dans son enveloppe des renforts métalliques ou non métalliques qui peuvent être au nombre de deux, qui se développent sur deux génératrices diamétralement opposées. Le jeu radial très réduit restant entre les fibres et la cavité interne du câble fait que lors de l'application d'efforts d'écrasement ou de chocs la déformation induite de la cavité interne contenant les fibres vient exercer des contraintes de pression rédhibitoires sur celles-ci, conduisant à des affaiblissements supplémentaires, voire des ruptures -

Il faut donc que la gaine soit renforcée pour limiter au maximum sa déformation lors de l'application des efforts précités.

Les solutions utilisées pour réduire ces déformations comme l'utilisation d'armures métalliques, de matières possédant un fort module d'Young, d'épaississement de la paroi, etc..., possèdent cependant des inconvénients.

La Demanderesse s'est donc attachée à trouver une solution à ce problème pour qu'un câble optique, quel que soit l'environnement dans lequel il se trouve, ait une résistance accrue vis à vis des contraintes auxquelles il pourrait être soumis et soit particulièrement résistant vis à vis des chocs ou des écrasements ponctuels qu'il pourrait subir notamment lors des opérations de pose.

Un objet principal de la présente invention consiste donc en un câble optique résistant à l'écrasement, comportant une pluralité de fibres optiques situées à l'intérieur d'une gaine, câble optique selon lequel la partie extérieure de la gaine possède quatre bossages moulés dans sa masse, qui se développent sur toute la longueur du câble, et forment le long des génératrices du câble, quatre nervures diamétralement opposées, qui débordent de la tangente à la partie circulaire de la gaine et dont deux bossages diamétralement opposés renferment des renforts métalliques ou non métalliques.

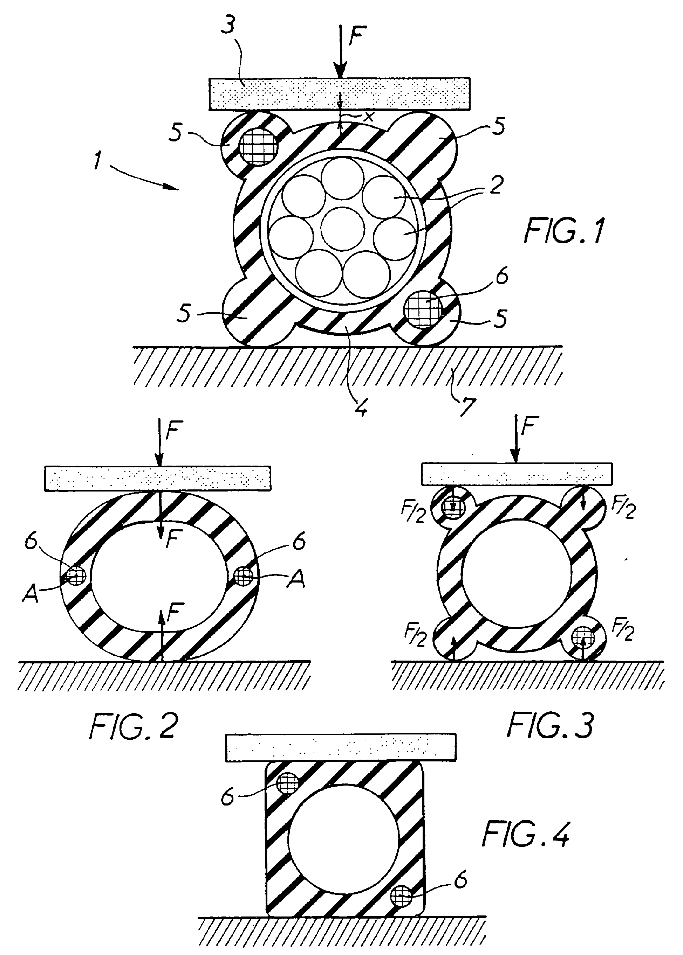

D'autres caractéristiques et avantages de l'invention ressortiront de la description qui va suivre, d'un exemple non limitatif de réalisation, en référence aux figures qui représentent des vues en coupe de câbles optiques. Les figures 1 et 3 sont des vues en coupe du câble selon l'invention. La figure 2 illustre l'application des efforts sur un câble circulaire de conception classique. La figure 4 schématise un câble qui n'est pas couvert par les revendications.

Le câble 1 représenté à la figure 1 comporte en son centre un ensemble de huit micromodules 2 à fibres optiques. Une gaine extérieure 4 enveloppe les micromodules.

La partie externe de la gaine 4 n'est pas circulaire mais possède le long de génératrices diamétralement opposées quatre bossages 5 qui se développent sur toute la longeur du câble. Les bossages moulés dans la masse de la gaine forment en quelque sorte des nervures extérieures qui débordent de la tangente à la partie circulaire de la gaine et qui ont un profil extérieur arrondi. Eventuellement on peut prévoir à l'intérieur d'un ou de plusieurs de ces bossages, des renforts de traction 6, métalliques ou non métalliques, par exemple en aramide résine, qui sont noyés dans la gaine au niveau des bossages, lors de l'extrusion du câble. En variante, on peut loger aussi des éléments de traction ou des fils de cuivre dans les bossages. Ces éléments peuvent servir de conducteur ou limiter le rayon de courbure minimal du câble.

Cette disposition permet donc d'éviter une forte épaisseur de la gaine 4 dont un des rôles est de résister à l'écrasement. Grâce aux bossages on peut donc diminuer l'épaisseur de la gaine, ce qui allège d'autant le poids du câble et diminue le coefficient de dilatation thermique.

Lors de l'application d'un effort de compression sur le câble, représenté sur la figure 1 par la présence d'une plaque 3 poussée par un effort F, la position stable du câble est celle représentée sur la figure 1. Si l'effort lui est appliqué selon une autre génératrice, il basculera spontanément pour se reposer comme représenté.

A épaisseur de gaine égale le cas d'application de l'effort représenté à la figure 3 est nettement plus favorable entre autres effets positifs que celui représenté en figure 2, car il produit un moment fléchissant au point A, inférieur. Il en résulte, pour un même effort, une flèche sous charge inférieure pour le cas de la figure 3 comparée à celle de la figure 2.

Suivant le même principe la forme extérieure pourrait être de forme quasiment carrée comme représenté en figure 4 mais qui n'est pas couvert par les revendications.

Pour être efficace au maximum, il faut que la distance X soit positive ou au minimum nulle, comme on le voit à la figure 1.

## Revendications

1. Câble optique (1) résistant à l'écrasement, comportant une pluralité de fibres optiques situées à l'intérieur d'une gaine où la partie extérieure de la gaine (4) possède quatre bossages (5), moulés dans sa masse, qui se développent sur toute la longueur du câble (1), et forment le long des génératrices du câble, quatre nervures diamétralement opposées qui débordement de la tangente à la partie circulaire de la gaine, **caractérisé en ce que** lesdits bossages comportent deux bossages (5) diamétralement opposés renfermant des renforts (6) métalliques ou non métalliques.

2. câble optique selon la revendication 1 **caractérisé en ce que** les bossages (5) ont un profil extérieur arrondi.

3. Câble optique selon la revendication 1 dont deux bossages (5) diamétralement opposés, comportent des renforts métalliques ou non métalliques **caractérisé en ce que** les deux autres bossages (5) comportent des éléments métalliques ou non pouvant servir de conducteur ou limiter le rayon de courbure minimal du câble.

## Claims

1. A crush-resistant optical cable (1) comprising a plurality of optical fibres placed inside a sheath, in which the outer part of the sheath (4) possesses four excrescences (5) moulded in its thickness, which develop over the entire length of the cable (1) and form, along the generatrices of the cable, four diametrically opposed ribs that extend beyond the tangent to the circular part of the sheath, **characterized in that** said excrescences include two diametrically opposed excrescences (5) that contain metallic or non-metallic reinforcements (6).

2. An optical cable according to claim 1, **characterized in that** the excrescences (5) have a rounded external profile.

3. An optical cable according to claim 1, two diametrically opposed excrescences (5) of which include metallic or non-metallic reinforcements, **characterized in that** the other two excrescences (5) include metallic or non-metallic elements that may serve as conductors or may limit the minimum radius of curvature of the cable.

## Patentansprüche

1. Faseroptisches Kabel (1) mit erhöhtem Quetschwiderstand, eine Vielzahl im Innern einer Hülle befindlicher optischer Fasern umfassend, wobei die Außenseite der Hülle (4) vier aus ihrer Masse gegossene Wülste (5) aufweist, die über die gesamte Länge des Kabels (1) ausgebildet sind und längs von Mantellinien des Kabels vier diametral entgegengesetzte Rippen bilden, die über die Tangente an dem kreisrunden Teil der Hülle hinausragen,
**dadurch gekennzeichnet, dass** die genannten Wülste zwei diametral entgegengesetzte Wülste (5) umfassen, die metallische oder nichtmetallische Verstärkungen (6) umschließen.

2. Faseroptisches Kabel nach Anspruch 1, **dadurch gekennzeichnet, dass** die Wülste (5) ein rundes Außenprofil haben.

3. Faseroptisches Kabel nach Anspruch 1, bei dem zwei diametral entgegengesetzte Wülste (5) metallische oder nichtmetallische Elemente umfassen, **dadurch gekennzeichnet, dass** die beiden anderen Wülste (5) metallische oder nichtmetallische Elemente umfassen, die als Leiter dienen können oder den minimalen Krümmungsradius des Kabels begrenzen können.
